# EUROPÄISCHE PATENTSCHRIFT

(11) **EP 2 019 941 B1**
(45) Veröffentlichungstag und Bekanntmachung des Hinweises auf die Patenterteilung: **04.08.2010**
(21) Anmeldenummer: 07727960.2
(22) Anmeldetag: 11.04.2007
(51) Int. Cl.: F16K 24/04, F16K 31/34

(54) **REGELVENTIL ZUM ABFÜHREN VON FLÜSSIGKEIT**
CONTROL VALVE FOR REMOVING LIQUID
SOUPAPE DE REGULATION POUR L'EVACUATION DE LIQUIDES

(30) Priorität: 15.05.2006 DE 102006022931
(43) Veröffentlichungstag der Anmeldung: 04.02.2009
(73) Patentinhaber: GESTRA AG, 28215 Bremen (DE)
(72) Erfinder: KRÜHSEL, Bernhard, 27243 Harpstedt (DE); HERBOLD, Günter, 28359 Bremen (DE)
(74) Vertreter: Andres, Mark
(86) Internationale Anmeldenummer: PCT/EP2007/053492
(87) Internationale Veröffentlichungsnummer: WO 2007/131842

(56) Entgegenhaltungen:
- DE-A1- 2 649 053
- FR-A1- 2 299 582
- GB-A- 2 333 167
- US-A- 3 054 419
- US-A- 4 082 106

## Beschreibung

Die Erfindung betrifft ein Regelventil zum Abführen von Flüssigkeit aus einem Behälter, mit einem bewegbaren Hauptventilkörper zum Öffnen und Schließen einer Austrittsöffnung für die abzuführende Flüssigkeit, und mit einem bewegbaren Pilotventilkörper zum Steuern des Hauptventilkörpers. Weiterhin betrifft die Erfindung einen Behälter mit einem daran angeordneten Regelventil.

Solche Regelventile zum Abführen von Flüssigkeit aus einem Behälter sind allgemein bekannt. Sie finden beispielsweise Anwendung zum Abführen von Kondensat aus Gasleitungen. Hierzu wird ein Behälter mit einer Gasleitung verbunden, so dass sich etwaiges Kondensat in dem Behälter sammelt. In dem Behälter ist zudem ein Ventil angeordnet zum Abführen des Kondensats durch eine Austrittsöffnung. Gleichzeitig herrscht in dem Behälter ein Überdruck, der auch als Vordruck bezeichnet wird und der geeignet ist, das Ventil in seiner geschlossenen Stellung zu halten. Hierzu wirkt der Differenzdruck zwischen Vordruck und dem Druck außerhalb des Behälters auf einer Fläche, die dem Querschnitt der Austrittsöffnung entspricht, auf den Hauptventilkörper, wodurch die Austrittsöffnung verschlossen wird.

Steigt das Kondensat in dem Behälter an, so wird ein Schwimmer gehoben, der mechanisch mit einem Pilotventilkörper gekoppelt ist und hierdurch das Pilotventil öffnet. Das Pilotventil ist über eine Leitung mit einer Kammer im Hauptventilkörper verbunden, so dass durch das Öffnen des Pilotventils gleichzeitig ein Öffnen der Kammer im Hauptventilkörper resultiert. Durch das Öffnen des Pilotventils kann somit der Druck in der Kammer (Kammerdruck) in dem Hauptventilkörper gesenkt werden. Je nach Öffnungsstellung des Pilotventils fällt der Druck in der Kammer so stark ab, dass aus der Druckdifferenz zwischen Vordruck und Kammerdruck ein Kraft in Öffnungsrichtung am Hauptventilkörpers resultiert und zum Öffnen der Austrittsöffnung durch den Hauptventilkörper führt, so dass das Kondensat abfließen kann.

Durch das Abfließen des Kondensats aus dem Behälter sinkt der Schwimmer wieder ab und schließt das Pilotventil. Dadurch nimmt der Druck in der Kammer des Hauptventilkörpers wieder zu, die Schließkraft überwiegt dann der Öffnungskraft und der Hauptventilkörper schließt die Austrittsöffnung wieder.

Das Regelventil gemäß dem Stand der Technik öffnet somit das Hauptventil bei Überschreiten einer bestimmten Kondensatmenge und schließt das Hauptventil beim Unterschreiten dieser Kondensatmenge.

Gerade bei großen abzuführenden Kondensatmengen erfolgt somit bei Überschreiten eines bestimmten Kondensatpegels das Öffnung des Hauptventils, anschließend ein Abfließen eines Teils des Kondensats, woraufhin der Kondensatpegel zum Schließen wieder unterschritten wird und das Hauptventil wieder schließt. Aufgrund der druckgesteuerten Öffnung und insbesondere Schließung erfolgen bei hohen Drücken im Behälter kräftige Schließvorgänge. Dabei kann es gerade bei großen abzuführenden Kondensatmengen zu einem stetigen Öffnungs- und Schließungsvorgang kommen. Ein solches stetiges Öffnen und Schließen bei kräftigen Schalthandlungen kann geräuschintensiv sein und stellt eine mechanische Belastung jedenfalls für die Ventilanordnung dar. Hinzu kommt, dass die Anordnung an insbesondere metallischen Gasrohren oder dergleichen eine gute aber unerwünschte Verteilung dieser Schaltgeräusche zur Folge hat. Ein derartiges Regelventil ist aus JP 600 11 791 bekannt.

Aufgabe der vorliegenden Erfindung ist es somit die beschriebenen Nachteile zumindest zu verringern und insbesondere ein Regelventil bereitzustellen, das ein stetiges Öffnen und Schließen des Hauptventilkörpers vermeidet.

Erfindungsgemäß wird somit für ein Regelventil nach dem Oberbegriff des Anspruches 1 vorgeschlagen, dass zum Koppeln des Hauptventilkörpers mit dem Pilotventilkörper ein elastisches Kopplungsmittel, insbesondere eine Feder vorgesehen ist und das Mitnehmermittel zum Übertragen einer Kraft des Pilotventilkörpers auf den Hauptventilkörper in Öffnungsrichtung des Hauptventilkörpers ausgebildet ist und/oder das elastische Kopplungsmittel zum Übertragen einer Kraft des Pilotventilkörpers auf den Hauptventilkörper in Schließrichtung des Hauptventilkörpers ausgebildet ist.

Hierbei kann der Pilotventilkörper zunächst aus seiner geschlossen Stellung heraus bewegt werden, um hierdurch einen Druck zu steuern. Bei Fortsetzung der Bewegung erlangt der Pilotventilkörper dann mittels des Mitnehmermittels in Kontakt mit dem Hauptventilkörper, um eine Kraft auf den Hauptventilkörper in seine Öffnungsrichtung zu übertragen. Bei Fortsetzung der Bewegung des Pilotventilkörpers bewegt sich dann auch der Hauptventilkörper aufgrund der Kopplung.

In Schließrichtung kann der Pilotventilkörper demnach über das elastische Kopplungsmittel eine Kraft auf den Hauptventilkörper in Schließrichtung übertragen, ohne dass eine unmittelbare Kopplung der Bewegung beider Ventilkörper besteht. Gleichzeitig wirkt hierbei das elastische Kopplungsmittel der Bewegung des Pilotventilkörpers in Schließrichtung entgegen.

Ist der Hauptventilkörper vertikal angeordnet und weist die Schließrichtung nach unten, so übt die Schwerkraft eine Kraft auf den Hauptventilkörper in Schließrichtung aus. Je nach Auslegung kann hierdurch das elastische Kopplungselement entbehrlich werden.

Vorzugsweise ist der Hauptventilkörper mechanisch, insbesondere über eine Hebelanordnung und/oder über den Pilotventilkörper mit einem Schwimmer gekoppelt. Hierbei kann eine Hebelanordnung unmittelbar am Hauptventilkörper und am Schwimmer angreifen und hierdurch die Kopplung bewirken oder aber der Pilotventilkörper ist über eine Hebelanordnung mit dem Schwimmer verbunden und die Kopplung erfolgt vom Schwimmer über den Pilotventilkörper auf den Hauptventilkörper. In diesem Fall können zur Kopplung des Hauptventilkörpers mit dem Schwimmer auch das elastische Kopplungsmittel und/oder das Mitnehmermittel eingesetzt werden.

Günstig ist es wenn der Schwimmer so mit dem Hauptventilkörper verbunden ist, dass eine etwaige Auftriebskraft am Schwimmer in Öffnungsrichtung des Hauptventilkörpers auf den Hauptventilkörper wirkt. Demnach würde ein Aufschwimmen des Schwimmers zu einem Öffnen der Austrittsöffnung führen, soweit die weiteren auf den Hauptventilkörper wirkenden Kräfte eine solche Bewegung zulassen. Abhängig von den weiteren auf den Hauptventilkörper wirkenden Kräfte und abhängig von der Schwimmerstellung kann der Hauptventilkörper auch Zwischenpositionen zwischen vollständig geschlossen und vollständig geöffnet einnehmen.

Weiterhin ist erfindungsgemäß ein Regeiventil vorgesehen, dass einen Faltenbalg zum Umgeben einer Kammer in dem Hauptventilkörper aufweist und wobei der Hauptventilkörper eine Steueröffnung aufweist, die von dem Pilotventilkörper verschließbar ist. Hierbei wird eine Kammer von dem Faltenbalg umgeben, um ein Abschluss der Kammer zu erreichen. Der Faltenbalg bewirkt hierbei eine Stabilität in radialer Richtung bei gleichzeitiger Beweglichkeit in axialer Richtung. Vorzugsweise ist ein solcher Faltenbalg aus einem Metall, insbesondere Edelmetall gefertigt. Die Steueröffnung in dem Hauptventilkörper ist von dem Pilotventilkörper verschließbar und somit ist eine Bewegung des Pilotventilkörpers zum Öffnen oder Schließen der Steueröffnung gleichzeitig eine Bewegung relativ zum Hauptventilkörper.

Vorzugsweise ist eine Schließ- und Öffnungsrichtung des Pilotventils bezogen auf die Steueröffnung auch die Schließ- bzw. Öffnungsrichtung des Hauptventilkörpers bezogen auf die Austrittsöffnung.

In einer günstigen Ausgestaltung umgibt der Faltenbalg im Wesentlichen den Hauptventilkörper als Zylindermantel. Günstig ist weiterhin, wenn der Faltenbalg eine Wand der Kammer, insbesondere zum Abschließen der Kammer gegenüber dem Behälter bildet. Hauptsächlich ist hierbei als Zylindermantel der Kammer der Faltenbalg vorgesehen. Die Kammer wird hierbei in radialer Richtung durch einen Faltenbalg abgeschlossen. Zum weiteren Abschließen können zwei Stirnseitenabschnitte vorgesehen sein, zwischen denen der Faltenbalg eine Verbindung herstellt. Die beiden Stirnseitenabschnitte können dabei über den in axialer Richtung elastischen Faltenbalg gegeneinander bewegt werden um dabei eine im Wesentlichen geschlossene Kammer beizubehalten.

Vorzugsweise ist hierbei nicht nur eine solche Kammer als ein Teil des Hauptventilkörpers vorgesehen, sondern es bildet diese Kammer bestehend aus dem Faltenbalg und der begrenzenden Stirnseitenabschnitte im Wesentlichen den Hauptventilkörper. Zum Öffnen und Schließen der Austrittsöffnung wird somit eine der Stirnseitenabschnitte, die eine Schließfläche zum Verschließen der Austrittsöffnung aufweist, gegenüber der Austrittsöffnung bewegt. Bei einer solchen Bewegung kann entweder der Stirnseitenabschnitt mit Austrittsöffnung gegenüber den anderen Stirnseitenabschnitt des Hauptventilkörpers bewegt werden, indem der Faltenbalg gedehnt oder gestreckt wird, oder der gesamte Hauptventilkörper einschließlich beider Stirnseitenabschnitte und Faltenbalg bewegt sich gegenüber der Austrittsöffnung. Entsprechend kommt auch eine kombinierte Bewegung in Betracht.

Gemäß einer bevorzugten Ausführungsform ist die vom Pilotventilkörper verschließbare Steueröffnung mit der Kammer verbunden, so dass durch den Pilotventilkörper die Kammer geöffnet werden kann, um einen Druckabbau in der Kammer zu ermöglichen. Dementsprechend führt eine Öffnungsbewegung des Pilotventilkörpers zum Öffnen der Steueröffnung. Hierdurch wird gleichzeitig die Kammer geöffnet, so dass sich Druck in der Kammer je nach Öffnungsgrad der Steueröffnung abbauen kann. Hierdurch werden die Druck- und Kraftverhältnisse, die auf den Hauptventilkörper wirken und ein Öffnen oder Schließen der Austrittsöffnung durch den Hauptventilkörper bewirken, beeinflusst. Somit kann durch die Steueröffnung in dem Hauptventilkörper der Druck in der Kammer, somit die Differenzdrücke zwischen Kammerdruck und Vordruck und zwischen Kammerdruck und Außendruck, der außerhalb des Behälters herrscht, und damit das Öffnen und Schließen der Austrittsöffnung durch den Hauptventilkörper gesteuert werden.

Bevorzugt ist hierbei das Regelventil dadurch gekennzeichnet, dass der Hauptventilkörper eine zur Kammer weisende Kammerstirnfläche aufweist, um einen ersten Differenzdruck zwischen dem Druck in der Kammer und einem Außendruck in eine Kraft in Schließrichtung des Hauptventilkörpers umzusetzen, und eine Öffnungsfläche, die zur Kammerstirnfläche abgewandt ist, um einen zweiten Differenzdruck zwischen dem Druck in dem Behälter und dem Druck in der Kammer in eine Kraft in Öffnungsrichtung des Hauptventilkörpers umzusetzen. Der Außendruck bezeichnet hierbei den Druck in der Austrittsöffnung und einem angeschlossenen Abführleitungssystem, wobei der Außendruck oftmals als Atmosphärendruck angenommen werden kann. Der erste Differenzdruck in der Kammer wirkt hierbei auf die Kammerstirnfläche, die im Wesentlichen der Querschnittsfläche der Austrittsöffnung entspricht. Die Querschnittsfläche der Austrittsöffnung wird als Austrittsfläche bezeichnet. Der zweite Differenzdruck wirkt grundsätzlich an der der Kammerstirnfläche abgewandten Seite in Richtung auf die Kammer und damit in Richtung auf den Faltenbalg um diesen zu stauchen. Die Fläche, auf die der zweite Differenzdruck in Öffnungsrichtung wirkt, wird als Öffnungsfläche bezeichnet. Die Öffnungsfläche entspricht im Wesentlichen der Querschnittsfläche des Faltenbalgs abzüglich der Austrittsfläche.

In einer noch weiteren günstigen Ausgestaltung ist das Regelventil dadurch gekennzeichnet, dass eine auf den Hauptventilkörper wirkende Kraft im Wesentlichen bestimmt wird durch eine Kraftdifferenz zwischen dem Produkt aus der Kammerstirnfläche und dem auf sie wirkenden ersten Differenzdruck einerseits und dem Produkt aus der Öffnungsfläche und dem auf sie wirkenden zweiten Differenzdruck andererseits. Auf der Kammerstirnfläche wirkt der erste Differenzdruck in Schließrichtung und auf die Öffnungsfläche wirkt der zweite Differenzdruck in Öffnungsrichtung. Wenn beide Differenzdrücke beispielsweise im stationären Zustand gleich groß sind, die Kammerstirnfläche aber größer als die Öffnungsfläche ist, resultiert eine Kraft in Schließrichtung. Unter der Annahme, dass die Kammerstirnfläche, die Öffnungsfläche, der Vordruck und der Außendruck konstant sind, kann die Kraftdifferenz nur durch Änderung des Kammerdrucks beeinflusst werden. Um eine Kraft in Öffnungsrichtung zu erhalten, muss somit der Kammerdruck verringert werden, bis das Produkt aus erstem Differenzdruck und Kammerstirnfläche kleiner wird als das Produkt aus zweitem Differenzdruck und Öffnungsfläche. Hierzu wird der Druck in der Kammer durch Öffnen der Steueröffnung durch den Pilotventilkörper verringert. Über das Verhältnis der beiden genannten Produkte ist somit der Hauptventilkörper steuerbar.

Bevorzugt ist der Pilotventilkörper zumindest teilweise in dem Hauptventilkörper angeordnet.

Günstig ist eine Ausgestaltung des Regelventils, bei der der Pilotventilkörper und der Hauptventilkörper koaxial zueinander angeordnet sind und/oder wenigstens einer der beiden Ventilkörper entlang ihrer Längsachse bewegbar ist. Vorzugsweise weist der Hauptventilkörper hierbei im Wesentlichen eine Hülsenform auf. Somit kann der Hauptventilkörper als Hülse vorgesehen sein, innerhalb der der Pilotventilkörper als etwa zylindrischer Kolben axial entlang seiner Achse und gleichzeitig der Achse des Hauptventilkörpers bewegbar ist. Die Steueröffnung kann hierbei mittig in der Kammerstirnfläche des Hauptventilkörpers vorgesehen sein. Der Pilotventilkörper und der Hauptventilkörper können hierbei im Wesentlichen bis auf den Faltenbalg aus Drehteilen aufgebaut sein und die Führung des Pilotventilkörpers innerhalb des Hauptventilkörpers wird dadurch gleichermaßen platzsparend.

Weiter bevorzugt weist der Hauptventilkörper an einem Ende eine im Wesentlichen kegel- oder kugelförmige Verjüngung zum Verschließen der Austrittsöffnung auf. Hierdurch ist eine günstige Schließwirkung bei gleichermaßen bautechnisch einfacher Ausgestaltung erzielbar.

Günstig ist die Steueröffnung innerhalb der kegel- bzw. kugelförmigen Verjüngung angeordnet. Somit kann durch diese kegel- bzw. kugelförmige Verjüngung die Austrittsöffnung gegenüber dem Behälter verschlossen werden und gleichzeitig die Steueröffnung dabei in die Austrittsöffnung ragen, so dass Druck aus der Kammer bei im Grunde geschlossener Austrittsöffnung gleichwohl über die Austrittsöffnung abgebaut werden kann.

Vorzugsweise ist der Faltenbalg zum Verschließen der Kammer an einer Seite mit einem Deckel verbunden oder er ist mit einem Deckel versehen. Hierdurch kann auf einfache Weise ein Verschließen der Kammer erreicht werden, wobei der Deckel wahlweise einen Bestandteil des Faltenbalgs bildet.

Dabei ist gemäß einer Ausgestaltung der Deckel gegenüber der Austrittsöffnung und/oder der Öffnungsfläche bewegbar angeordnet. Eine solche Bewegbarkeit besteht insbesondere in axialer Richtung zur Austrittsöffnung hin bzw. von der Austrittsöffnung weg. Dabei kann die Bewegung zusammen oder getrennt mit der Öffnungsfläche erfolgen. Erfolgt die Bewegung getrennt von der Öffnungsfläche oder teilweise getrennt von ihr, so bedeutet dies, dass bei der Bewegung der Faltenbalg gedehnt oder gestaucht wird.

In einer vorteilhaften Ausgestaltung weist der Hauptventilkörper einen Anschlag auf. Hierdurch ist seine Bewegung insbesondere in axialer Richtung begrenzt. Ein solcher Anschlag kann beispielsweise an dem Deckel des Faltenbalgs vorgesehen sein, wodurch in diesem Fall der Anschlag mit einem Ende des Faltenbalgs verbunden ist. Die Öffnungsfläche kann sich hierbei relativ zu dem Deckel bewegen. Wird eine bestimmte Stauchung des Faltenbalgs hierbei erreicht, erreicht die Bewegung dann den Anschlag, so dass eine weitere Stauchung des Faltenbalgs nicht mehr erfolgt.

Für eine Bewegung des Deckels gegenüber der Austrittsöffnung kann eine Führung vorgesehen sein, wie beispielsweise ein den Faltenbalg umschließender Führungszylinder.

Gemäß einer vorteilhaften Ausführung ist das Regelventil dadurch gekennzeichnet, dass der Pilotventilkörper durch eine Durchgangsöffnung, die insbesondere in dem Deckel angeordnet ist, in die Kammer ragt und die Durchgangsöffnung eine axiale Bewegung des Pilotkörpers zulässt. Hierbei ist der Pilotventilkörper in dem Hauptventilkörper angeordnet, und ragt gleichzeitig durch die Durchgangsöffnung nach außen, wo er mit einem Schwimmer gekoppelt sein kann. In dem Hauptventilkörper und dabei in der Kammer kann der Pilotventilkörper somit bewegt werden, um die Steueröffnung zu öffnen oder zu schließen. Außerhalb des Hauptventilkörpers ist eine Kopplung beispielsweise mit einem Schwimmer vorgesehen. In diesem Fall wird der Pilotventilkörper von außen durch den Schwimmer bewegt, um in dem Hauptventilkörper die Steueröffnung ganz oder teilweise zu öffnen oder zu schließen.

Günstig ist es, wenn für einen zumindest stationären Druckausgleich zwischen der Kammer und dem Behälter eine Ausgleichsöffnung vorgesehen ist, insbesondere wenn die Ausgleichsöffnung mit der Durchgangsöffnung übereinstimmt. Durch eine solche Ausgleichsöffnung wird erreicht, dass im stationären und geschlossenen Zustand des Hauptventilkörpers die Kammer im Wesentlichen den gleichen Druck aufweist wie der Behälter. Der Kammerdruck soll dann also dem Vordruck entsprechen. Die Ausgleichsöffnung muss dabei so klein gehalten werden, dass sie im Falle der Öffnung des Steuerventils einem Druckabbau in der Kammer durch die Steueröffnung nicht vollständig entgegensteht. Ein Druckabfall in der Kammer vollständig auf den Wert des Außendrucks, also auf den Druck der im Bereich der Austrittsöffnung herrscht, braucht nicht gewährleistet zu werden. Es muss nur ein ausreichender Druckabfall in der Kammer noch gewährleistet sein. Beispielsweise könnte, bezogen auf Atmosphärendruck bei einem Außendruck von 0 Bar im Bereich der Austrittsöffnung und bei einem Vordruck von 4 Bar in dem Behälter der Kammerdruck bei geöffneter Steueröffnung auf 2 Bar abfallen, wobei der Hauptventilkörper dann öffnet.

Eine solche Ausgleichsöffnung ist somit auf einfache Weise erreichbar, wenn sie mit der Durchgangsöffnung übereinstimmt, wobei sich die gewünschte Wirkung erst zusammen mit einem durch die Durchgangsöffnung durchgeführten Pilotventilkörper ergibt. Die Ausgleichsöffnung bildet dann einen kleinen Ringspalt um den Pilotventilkörper im Bereich der Durchgangsöffnung.

Auch zum Verschließen der Steueröffnung ist eine kegel- oder kugelförmige Ausgestaltung, die somit am Ende des Pilotventilkörpers vorzusehen ist, günstig.

Vorzugsweise wird das erfindungsgemäße Regelventil in einem Behälter angeordnet und speziell auf diesen abgestimmt.

Eine Ausführungsform wird nachfolgend unter Bezugnahme auf die begleitenden Zeichnungen im Einzelnen beschrieben. Es zeigen:
- Figur 1: eine Ventilanordnung gemäß dem Stande der Technik in einer Schnittansicht,
- Figur 2: eine erfindungsgemäße Ventilanordnung mit Schwimmer in einem Behälter bei vollständig geöffneter Austrittsöffnung in einer Schnittansicht,
- Figur 3: einen Hauptventilkörper mit enthaltenem Pilotventilkörper in einer Schnittansicht,
- Figur 4: einen Hauptventilkörper gemäß Figur 3 in einer perspektivischen, aufgeschnittenen Darstellung,
- Figur 5: ein Regelventil mit Schwimmer in einem vollständig geschlosse- nen Zustand in einer Schnittansicht,
- Figur 6: den Ausschnitt A gemäß Figur 5,
- Figur 7: eine perspektivische Darstellung des Regelventils mit Schwimmer gemäß Figur 5,
- Figur 8: ein Regelventil mit Schwimmer mit geöffneter Steueröffnung aber geschlossener Austrittsöffnung in einer Schnittansicht,
- Figur 9: ein Regelventil mit Schwimmer mit geöffneter Steuer- und Aus- trittsöffnung in einer Schnittansicht,
- Figur 10: ein Regelventil mit Schwimmer mit teilweise gehobenem Falten- balgdeckel in einer Schnittansicht,
- Figur 11: ein Regelventil mit Schwimmer und mit vollständig gehobenem Faltenbalgdeckel in einer Schnittansicht und
- Figur 12: ein Regelventil gemäß Figur 11 in einer perspektivischen Schnitt- ansicht.

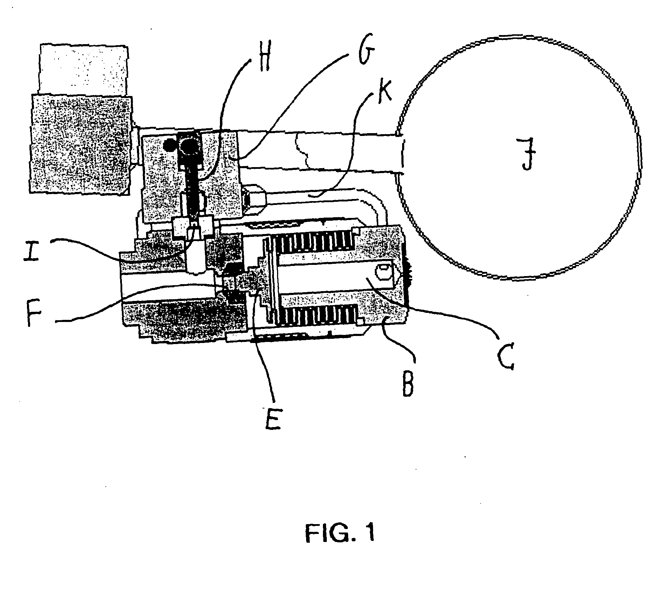

Ein bekanntes Regelventil gemäß Figur 1 weist einen Hauptventilkörper B mit einer Kammer C, einem Faltenbalg D und einem Schließabschnitt E auf. Der Schließabschnitt E ist zum Schließen einer Austrittsöffnung F vorgesehen. Die Steuerung des Hauptventilkörpers B erfolgt über das Pilotventil G mit einem Pilotventilkörper H und einer Steueröffnung I. Wenn der Schwimmer J sich hebt, öffnet der Pilotventilkörper H die Steueröffnung I und in dem Pilotventil G erfolgt ein Druckabfall, der sich über die Verbindungsleitung K auf die Kammer C überträgt. Somit fällt auch dann der Druck in der Kammer C ab, und der gemäß Abbildung von links auf den Schließabschnitt wirkende Differenzdruck zwischen Behälter und Kammer multipliziert mit der Angriffsfläche überwiegt dem Differenzdruck zwischen der Kammer C und der Austrittsöffnung F multipliziert mit der Querschnittsfläche der Austrittsöffnung F. Als Folge bewegt sicht der Hauptventilkörper B aus der Austrittsöffnung F heraus, um diese zum Abgeben von Kondensat oder einer anderen Flüssigkeit zu öffnen.

Senkt sich der Schwimmer J wieder, wird die Steueröffnung geschlossen und der Druck im Steuerventil G und somit auch in der Kammer C steigt wieder an. Als Folge überwiegt die aus den Drücken resultierende und in Schließrichtung wirkende Kraft und die Austrittsöffnung wird geschlossen.

Das Pilotventil und das Hauptventil sind bei diesem bekannten Regelventil örtlich voneinander getrennt und es erfolgt keine direkte mechanische Kopplung, weder zwischen dem Pilotventilkörper H und dem Hauptventilkörper B noch zwischen dem Schwimmer J und dem Hauptventilkörper K.

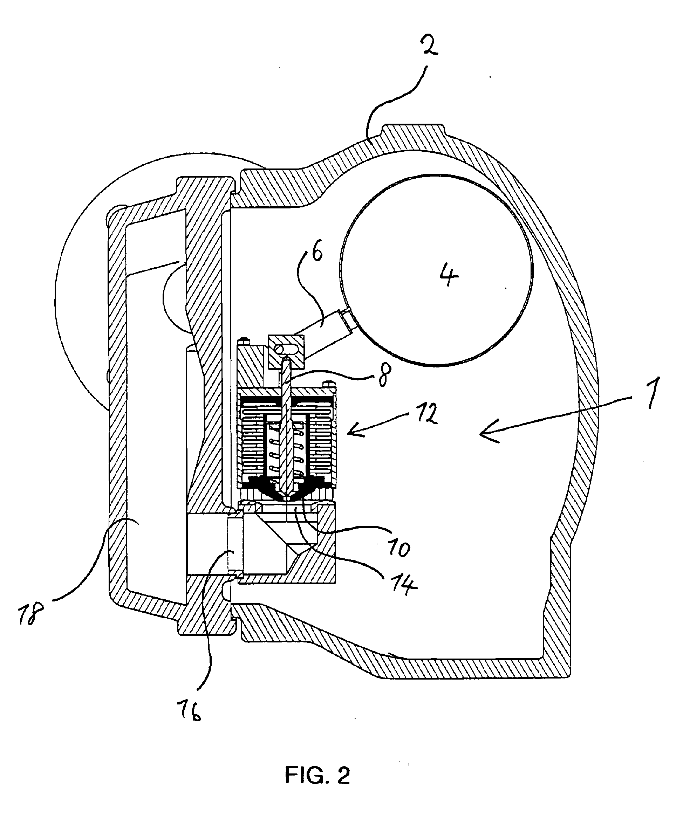

Gemäß Figur 2 ist ein erfindungsgemäßes Regelventil 1 in einem Behälter 2 zusammen mit einem Schwimmer 4, der sich in seiner oberen Endstellung befindet, angeordnet. In dem Behälter 2, der oftmals auch als Haube bezeichnet wird, kann sich Flüssigkeit wie beispielsweise Kondensat sammeln. Durch einen steigenden Flüssigkeitspegel wird eine Kraft auf den Schwimmer 4 in gemäß der Darstellung nach oben weisender Richtung aufgebracht. Der Schwimmer 4 überträgt eine solche Kraft über den Arm 6 auf den Pilotventilkörper 8 um schließlich für den Schließabschnitt 10 des Hauptventilkörpers 12 eine öffnende Bewegung zu initiieren. Bei einer solchen öffnenden Bewegung gibt der Schließabschnitt 10 die Austrittsöffnung 14 frei. Dieser Öffnungsmechanismus wird nachfolgend noch detailliert beschrieben werden.

Bei geöffneter Austrittsöffnung kann dann die Flüssigkeit aus dem Behälter 2 an dem Schließabschnitt 10 vorbei durch die Austrittsöffnung 14 über eine Anschlussvorrichtung 16 und schließlich ein Abführleitungssystem 18 aus dem Behälter 2 abgeführt werden.

Wenn durch das Abführen der Flüssigkeit aus dem Behälter 2 der Flüssigkeitspegel sinkt, senkt sich auch der Schwimmer 4 und der Schließabschnitt 10 kann schließlich die Austrittsöffnung 14 verschließen.

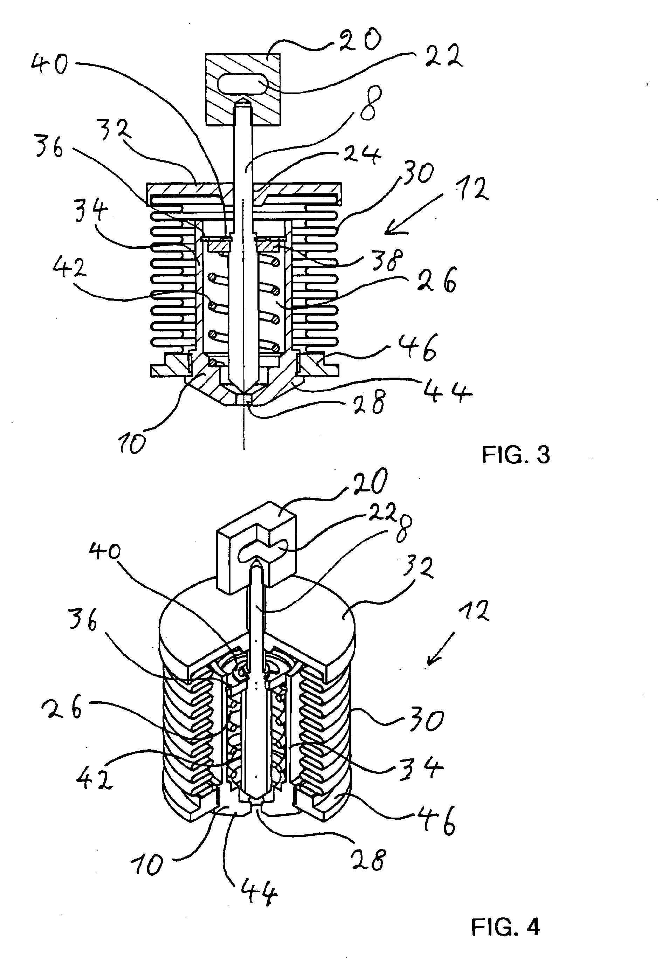

In den Figuren 3 und 4 ist von dem Regelventil 1 lediglich der Hauptventilkörper 12 zusammen mit dem eingesetzten Pilotventilkörper 8 dargestellt. Der Pilotventilkörper 8 weist an seinem gemäß Darstellung oberen Ende ein Verbindungselement 20 mit Verbindungsöffnung 22 zum Verbinden mit einem Schwimmer auf. Das Verbindungselement 20 ist hier auf den Pilotventilkörper 8 aufgeschraubt.

Der Pilotventilkörper ragt durch eine Durchgangsöffnung 24 in die Kammer 26 bis in die Nähe einer Steueröffnung 28. In der Durchgangsöffnung 24 ist zwischen dem Pilotventilkörper 8 und dem Deckel 32 noch ein kleiner Ringspalt vorhanden, der als Druckausgleichsöffnung verwendet wird. Diese Druckausgleichsöffnung ist jedoch gegenüber der Steueröffnung 28 als klein anzusehen.

Die Steueröffnung 28 ist in den Figuren 3 und 4 in einer geöffneten Stellung dargestellt. Die Kammer 26 wird im Wesentlichen gebildet durch den Faltenbalg 30, den Deckel 32 und den Schließabschnitt 10. An dem Schließabschnitt 10 ist eine Pilotführung 34 angeordnet, die in die Kammer 26 ragt, und nicht deren Begrenzung bildet. Innerhalb der Pilotführung 34 ist ein Mitnehmerring 36 angeordnet. Der Pilotventilkörper 8 liegt mit einer Mitnehmerscheibe 38 gemäß der Darstellung von unten an dem Mitnehmerring 36 an. Die Mitnehmerscheibe 38 ist durch einen Klemmring 40 an dem Pilotventilkörper 8 fixiert. Der Mitnehmerring 36 und die Mitnehmerscheibe 38 sind zusammen ein Mitnehmermittel. Der Pilotventilkörper 8 befindet sich somit in seiner gegenüber der Steueröffnung 28 vollständig geöffneten Position, da das Mitnehmermittel einer weiteren Öffnung entgegensteht. Die Kammer 26 ist über die geöffnete Steueröffnung 28 mit der Umgebung verbunden. Dabei ist unter Umgebung bei bestimmungsgemäßer Verwendung letztlich das Abführleitungssystem, das gemäß Figur 2 mit 18 bezeichnet wurde, zu verstehen.

Innerhalb der Pilotführung 34, die hier im Wesentlichen als Zylindermantel ausgeführt ist, ist als elastische Kopplung eine Feder 42 angeordnet. Die Feder 42 sitzt einerseits an dem Schließabschnitt 10 an der zur Kammer 26 gewandten Seite und andererseits an der Mitnehmerscheibe 38. Die Feder 42 stellt damit ein elastisches Kopplungsmittel zwischen dem Pilotventilkörper 8 und dem Hauptventilkörper 12 dar. Die Feder 42 übt dabei von dem Schließabschnitt 10 aus über die Mitnehmerscheibe 38 eine Kraft auf den Pilotventilkörper 8 aus. Diese Kraft ist bezogen auf die Steueröffnung 28 in Öffnungsrichtung gerichtet. Der Pilotventilkörper 8 und die Steueröffnung 28 sind durch die Feder 42 somit in Öffnungsstellung vorgespannt.

Der Pilotventilkörper 8 ist einerseits über Mitnehmermittel, nämlich den Mitnehmerring 36 und die Mitnehmerscheibe 38 und andererseits über ein elastisches Kopplungselement, nämlich die Feder 42 mit dem Hauptventilkörper 12 mechanisch gekoppelt.

Der Schließabschnitt 10 teilt sich in einen inneren Schließabschnitt 44 und einen äußeren Schließabschnitt 46 auf. Diese beiden Schließabschnitte 44 und 46 sind fest miteinander verbunden und insbesondere aus fertigungstechnischen Gründen als zwei Elemente vorgesehen und dargestellt. Der Faltenbalg 30 ist dabei fest mit dem äußeren Schließabschnitt 46 und mit dem Deckel 32 verbunden. Oftmals wird auch das Element bestehend aus Deckel 32, Faltenbalg 30 und gegebenenfalls auch noch zusammen mit dem äußeren Schließabschnitt 46 insgesamt als Faltenbalg bezeichnet.

Zur Erläuterung der Funktionsweise des erfindungsgemäßen Regelventils wird dieses nun anhand einiger Ventilstellungen im Einzelnen erläutert.

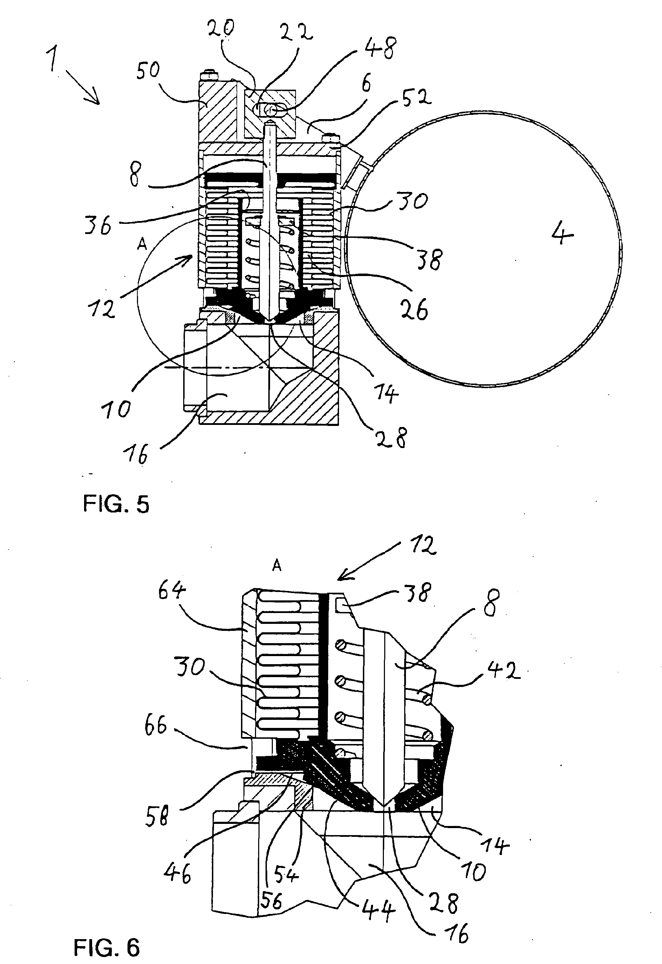

Figur 5 zeigt das Regelventil 1 mit einem Schwimmer 4 in unterster Stellung. Das Regelventil 1 ist zusammen mit dem Schwimmer 4 in einem Behälter angeordnet, wie Figur 2 zeigt. Der besser Übersichtlichkeit halber ist dieser Behälter in den folgenden Figuren jedoch nicht dargestellt. In der Position gemäß Figur 5 wirkt die tiefe Stellung des Schwimmers 4 über den Arm 6 und eine Querstange 48, die in der Verbindungsöffnung 22 gelagert ist, über das Verbindungselement 20 auf den Pilotventilkörper 8. Der Arm 6 des Schwimmers 4 ist dabei an einem Lagerabschnitt 50 schwenkbar angeordnet. Der Pilotventilkörper 8 wird in einer Führungsplatte 52 gelagert und geführt. Eine Schwenkbewegung des Schwimmers 8 an dem Arm 6 wird somit in eine axiale Bewegung des Pilotventilkörpers 8 umgesetzt. Diese axiale Bewegung weist gemäß Figur 5 in senkrechte Richtung. Eine solche senkrechte Bewegungsrichtung ist jedoch nicht notwendig, sondern es kann auch eine waagerechte oder andere axiale Bewegung durchgeführt werden, wenn das Regelventil entsprechend eingebaut ist.

Bei dieser tiefen Stellung des Regelventils 1 ist die Steueröffnung 28 durch den Pilotventilkörper 8, nämlich seinen im Bereich der Steueröffnung 28 ausgebildeten etwa kegelförmigen Abschnitt, geschlossen. Dabei ist das Mitnehmermittel, das aus dem Mitnehmerring 36 und der Mitnehmerscheibe 38 gebildet wird, frei. Ebenfalls ist die Austrittsöffnung 14 durch den Schließabschnitt 10 verschlossen.

Das Regelventil 1 befindet sich somit in seinem vollständig geschlossenen Ruhezustand und der Druck in der Kammer 26 entspricht somit dem Vordruck in dem Behälter. Lediglich der Bereich in der Anschlussvorrichtung 16, also unterhalb der Austrittsöffnung 14, weist einen anderen Druck auf, nämlich Außendruck, der in der Regel etwa Atmosphärendruck beträgt.

Der Pilotventilkörper 8, der Hauptventilkörper 12 als auch die Austrittsöffnung 14 sind im Wesentlichen konzentrisch um dieselbe Achse angeordnet. Zur detaillierten Darstellung der Steueröffnung 28 und der Austrittsöffnung 14 reicht daher eine Vergrößerung nur einer Seite dieser Öffnungen aus, wie in Figur 6 gezeigt ist.

Die Vergrößerung zeigt eine Berührung des Öffnungsrandes 54 der Austrittsöffnung 14 im Bereich eines Schließkreises 56. Innerhalb des Schließkreises 56 liegt in der Austrittsöffnung 14 und somit in der Anschlussvorrichtung 16 kein Vordruck an, sondern Außendruck. Der Schließabschnitt 10 ist bis auf den Bereich der Austrittsöffnung 14 vom Vordruck umgeben und zwar auch durch den Öffnungsspalt 58. Es wirkt ein Differenzdruck zwischen dem Vordruck und dem Außendruck auf eine Fläche von der Größe der Austrittsfläche, die hier in dem Schließkreis 56 ausgebildet ist. Die Schließkraft ergibt sich hier aus dem Produkt dieses Differenzdrucks zwischen dem Vordruck und dem Außendruck und der Austrittsfläche.

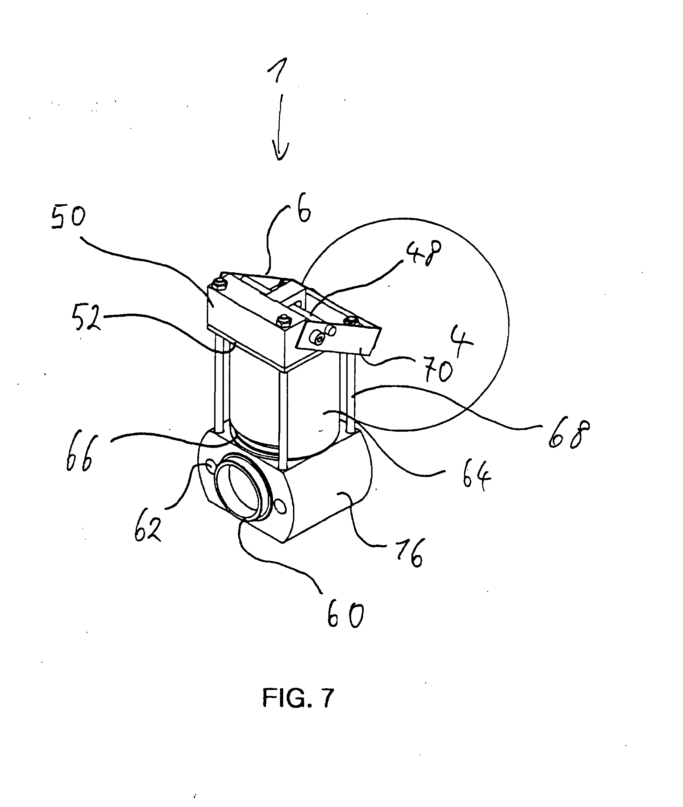

Das Regelventil in seiner Stellung gemäß Figur 5 und 6 ist in seiner perspektivischen Darstellung in der Figur 7 gezeigt. Demnach ist zu erkennen, dass das Regelventil 1 eine Anschlussvorrichtung 16 mit einem Anschlussstutzen 60 aufweist, um mit einem weiteren Abführleitungssystem verbunden zu werden. Eine Verbindung kann mittels der Bohrungen 62 erfolgen. Auf der Anschlussvorrichtung 16 sitzt eine Hauptführung 64 für den Hauptventilkörper 12 auf. Diese Hauptführung 64 weist Durchgänge 66 auf, durch die zum Einen Flüssigkeit zur Austrittsöffnung 14 gelangen kann und zum Anderen auch eine Druckverbindung zwischen Hauptventilkörper und dem Behälterinneren und somit dem Vordruck besteht.

Auf der Hauptführung 64 ist die Führungsplatte 52 angeordnet, die außerdem durch Haltestangen 68 auf der Anschlussvorrichtung 16 gehalten wird. Auf der Führungsplatte 52 ist der Lagerabschnitt 50 angeordnet, in dem der Arm 6 gelagert ist. Der Arm 6 umfasst 2 parallel verlaufende Streben 70. Zwischen den Streben 70 ist die Querstange 48 angeordnet, die durch die Verbindungsöffnung 22 in dem Verbindungselement 20 ragt, um eine Kraft von dem Schwimmer 4 auf den Pilotventilkörper 8 zu übertragen.

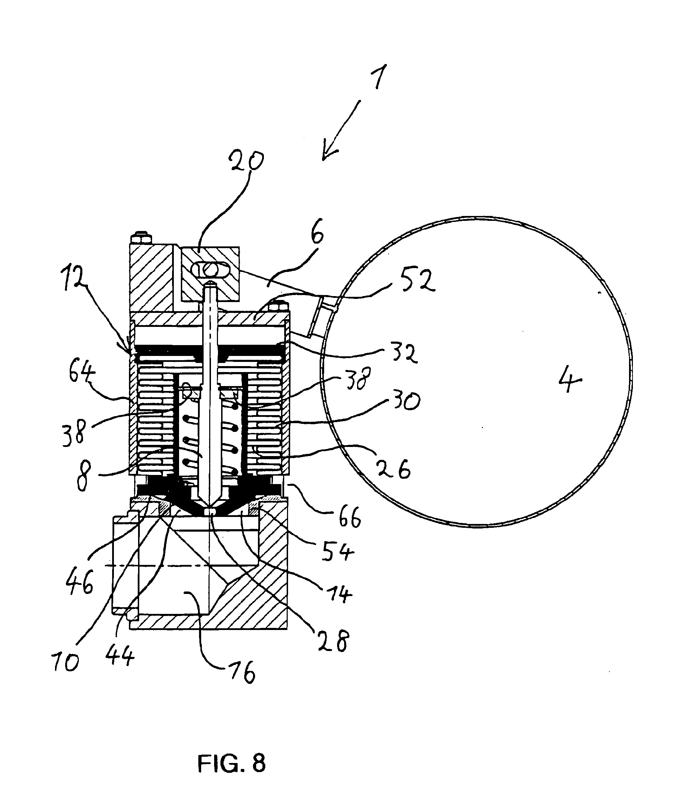

Der Schwimmer 4 ist gemäß Figur 8 gegenüber der Stellung gemäß der Figuren 5 bis 7 etwas angehoben. Hierdurch ist der Pilotventilkörper 8 durch die mechanische Kopplung zu dem Schwimmer 4 ebenfalls angehoben. Der Pilotventilkörper 8 liegt mit seiner Mitnehmerscheibe 38 an dem Mitnehmerring 36 an. Da der Hauptventilkörper 12 durch die Druckverhältnisse zunächst fest in seiner geschlossenen Stellung in der Austrittsöffnung 14 gehalten wird, kann sich der Pilotventilkörper 8 zunächst nicht weiter bewegen, selbst wenn noch eine Auftriebskraft auf den Schwimmer 4 wirkt. Eine solche Auftriebskraft ist jedoch regelmäßig gering im Vergleich zu der druckbedingten Schließkraft.

In der Stellung gemäß Figur 8 ist die Steueröffnung 28 durch den Pilotventilkörper 8 geöffnet, so dass der Druck in der Kammer sinkt. Die Öffnung der Steueröffnung 28 ist vergleichsweise groß im Vergleich zu dem Ringspalt, der sich in der Durchgangsöffnung 24 zwischen dem Pilotventilkörper 8 und der Führungsplatte 52 ausbildet. Dieser Öffnungsspalt ist so gering, dass er in der Darstellung nicht erkennbar ist.

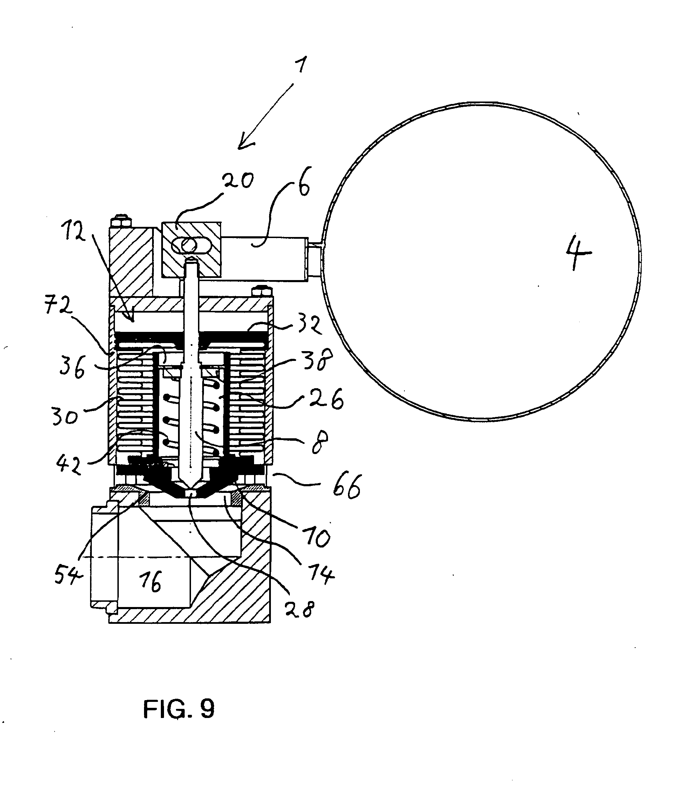

Wenn das Pilotventil die Steueröffnung öffnet entsteht ein zweiter Differenzdruck zwischen Vordruck und Kammerdruck und der erste Differenzdruck zwischen Kammerdruck und Außendruck ändert sich. Der erste Differenzdruck multipliziert mit der Austrittsfläche erzeugt die Schließkraft. Der zweite Differenzdruck multipliziert mit der Öffnungsfläche, die hier als Ringfläche um den Schließkreis ausgebildet ist, erzeugt die Öffnungskraft. Um so größer die Steueröffnung 28 geöffnet ist, um so mehr fällt der Kammerdruck ab und um so stärker überwiegt die Öffnungskraft. Dieser erste Öffnungszustand der Austrittsöffnung 14 ist in der Figur 9 dargestellt. Wenn die Öffnungskraft überwiegt, öffnet der Schließabschnitt 10 die Austrittsöffnung 14, der Faltenbalg 30 zieht sich zusammen und der Deckel 32 stützt sich an seinem Sitz 72 ab. Es kann somit Flüssigkeit aus dem Behälter durch den Durchgang 66 zwischen dem Schließabschnitt 10 und dem Öffnungsrand 54 durch die Austrittsöffnung 14 und weiter durch die Anschlussvorrichtung 16 abfließen.

Durch die Öffnungsbewegung des Schließabschnitts 10 hat sich gleichzeitig der Mitnehmerring 36 in Öffnungsrichtung bewegt und dabei eine weitere Bewegung der Mitnehmerscheibe 38 und somit des Pilotventilkörpers 8 ermöglicht. Entsprechend wurde eine weitere Bewegung des Schwimmers 4 ermöglicht. Bei der bisher durchgeführten Bewegung des Hauptventilkörpers 12 hat sich der Schließabschnitt 10 bewegt und dabei den Faltenbalg 30 gestaucht. Der Deckel 32 ist in seiner Position verblieben.

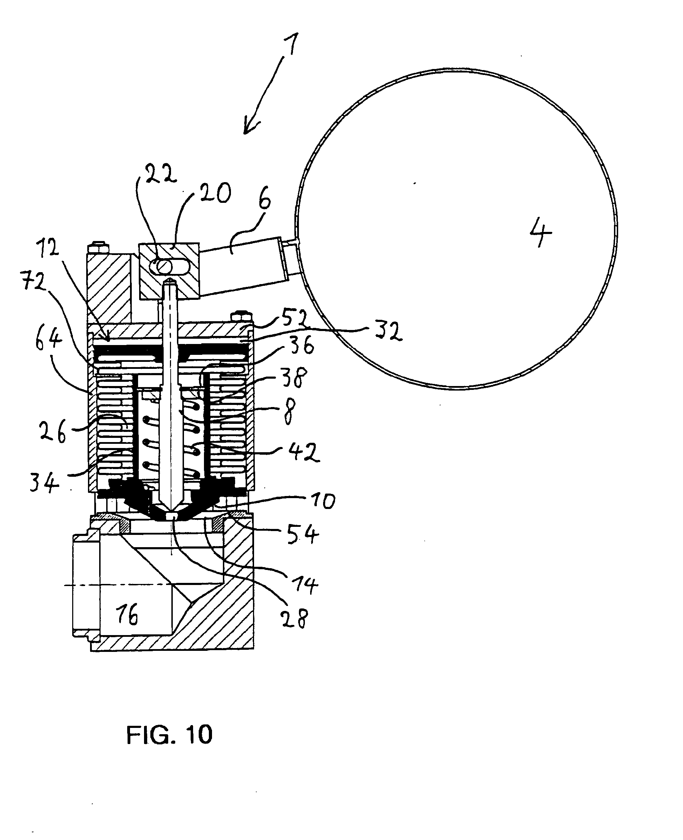

Bei großer Öffnung der Austrittsöffnung 14 und gleichermaßen großem Mediumstrom insbesondere Flüssigkeitsstrom durch die Austrittsöffnung 14 kann die Strömung aus der Kammer 26 heraus durch die Steueröffnung 28 gestört sein und der Druck in der Kammer 26 wieder zunehmen. Der zweite Differenzdruck nimmt ab, bis sich der Faltenbalg 30 aufgrund seiner Federsteifigkeit entspannt. Der Deckel 32 kann dann aus seinem Sitz 72 geschoben werden, wie dies in der Figur 10 dargestellt ist. Hierbei ist nicht nur der Deckel 32 aus seinem Sitz 72 geschoben, sondern auch die Austrittsöffnung 14 im Vergleich zu Figur 9 noch weiter geöffnet. Dies ist am deutlichsten an der ebenfalls höheren Stellung des Schwimmers 4 zu erkennen.

Bei einer stark geöffneten Austrittsöffnung ist insbesondere die in Öffnungsrichtung auf den Schließabschnitt wirkende Kraft nicht so deutlich berechenbar wie in der geschlossenen Ruhestellung. Zum Einen kommen zu dem statischen Differenzdruck Effekte durch die durch die Austrittsöffnung 14 strömende Flüssigkeit und zum Anderen wird für einen in Öffnungsrichtung weisenden Differenzdruck eine größere Fläche als die Öffnungsfläche wirksam. Es kommt hinzu, dass im weitgeöffneten Zustand wie in der Figur 10 gezeigt auch ein hoher Flüssigkeitspegel vorhanden ist und somit eine erhöhte Auftriebskraft über den Schwimmer 4 auf den Pilotventilkörper 8 und somit auf den Hauptventilkörper 12 in Öffnungsrichtung wirkt.

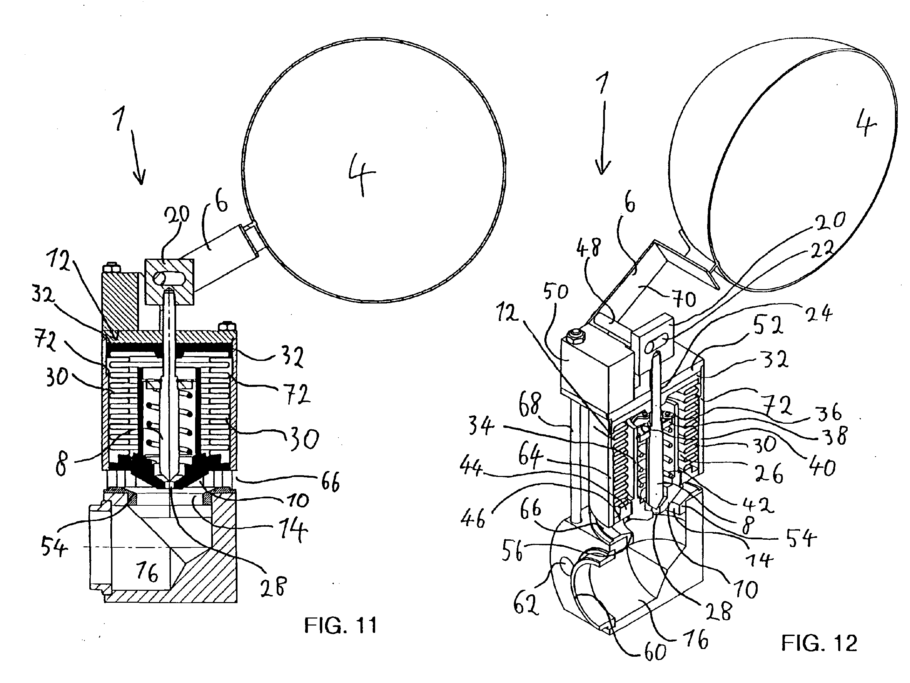

Jedenfalls lassen die druckbedingten Kräfte Spielraum, um eine Bewegung des Schwimmers 4 über eine mechanische Kopplung auf den Hauptventilkörper zu übertragen. Die Kopplung erfolgt hierbei von dem Schwimmer 4 über den Arm 6 auf den Pilotventilkörper 8 und von da aus weiter über die Mitnehmerscheibe 38 auf den Mitnehmerring 36 und damit auf die Pilotführung 34 und somit auf den Hauptventilkörper 12. Hierbei ist die druckgesteuerte Bewegung des Hauptventilkörpers in eine mechanisch durch den Schwimmer 4 geführte Bewegung übergegangen. Der Hauptventilkörper, bestehend aus Faltenbalgdeckel 32, Faltenbalg 30 und Schließabschnitt 10 wird in diesem Fall, wenn die druckbedingten Kräfte nicht mehr dominant sind durch eine mechanische Kopplung mit dem Schwimmer 4 im Grunde wie ein starrer Kolben bewegt. Hierbei kann sich der Hauptventilkörper gegenüber der Figur 10 noch weiter in Öffnungsrichtung bewegen, bis der Deckel 32 die Führungsplatte 52 erreicht, wie dies in der Figur 11 und 12 dargestellt ist. Dadurch, dass sich der Deckel 32 aus seinem Sitz 72 herausbewegen kann, wird erreicht, dass sich bei großer Öffnung der Austrittsöffnung 14 der Faltenbalg 30 nicht zu stark stauchen muss. Somit arbeitet der Faltenbalg 30 zum Einen nicht der Öffnungsbewegung entgegen und wird zum Anderen auch keiner zu starken Stauchung ausgesetzt. Somit werden zu starke Ermüdungserscheinungen als auch eine Verringerung der Lebensdauer des Faltenbalgs vermieden.

Ein weiterer positiver Nebeneffekt dieser gemeinsamen Bewegung von Deckel 32, Faltenbalg 30 und Schließabschnitt 10 liegt darin, dass bei sehr geringen Vordrücken im Behälter und somit geringen Differenzdrücken die Austrittsöffnung 14 sogar ausschließlich oder zumindest überwiegend direkt durch die mechanische Kopplung zwischen Schwimmer und Hauptventilkörper geöffnet und geschlossen werden kann. Die Stellung des Hauptventilkörpers hängt dann im Wesentlichen von der Stellung des Schwimmers 4 ab.

Ein wesentlicher Vorteil gegenüber dem Stand der Technik ergibt sich bei der vorliegenden Erfindung auch für hohe Vordrücke beim Schließen der Austrittsöffnung 14. Ein Schließen erfolgt dann, wenn der Flüssigkeitspegel im Behälter sinkt und sich somit der Schwimmer von seiner Stellung gemäß Figur 11 und 12 über die Stellung gemäß der Figur 10 bis zur Stellung gemäß der Figur 9 bewegt. Bei dieser Bewegung arbeitet der Deckel 32, der Faltenbalg 30 und der Schließabschnitt 10 im Wesentlichen zusammen wie ein starrer Körper. In der Stellung gemäß Figur 9 hat der Deckel 32 jedoch seinen Sitz 72 erreicht und kann somit nicht weiter in Schließrichtung bewegt werden.

Nun hängt die Bewegung des Hauptventilkörpers 12 im Wesentlichen von der Bewegung des Schwimmers 4 ab. Das heisst beim Abwärtsbewegen des Schwimmers 4 wird zunächst die Bewegung auf den Pilotventilkörper 8 übertragen. Der Pilotventilkörper 8 ist über die Mitnehmermittel bestehend aus Mitnehmerring 36 und Mitnehmerscheibe 38 einerseits und über die Feder 42 andererseits mit dem Hauptventilkörper 12 verspannt. Bei einer Bewegung des Pilotventilkolbens 8 in Schließrichtung wird somit eine entsprechende Kraft über die Feder 42 auf das Schließmittel 10 und somit den Hauptventilkörper 12 übertragen und dieser in Richtung auf die Austrittsöffnung 14 bewegt. Somit nähert sich der Pilotventilkörper 8 zunächst nicht der Steueröffnung 28, sondern bewegt sich mit ihr zusammen in Richtung auf die Austrittsöffnung. Die etwa ausgewogenen druckbedingten Kräfte bleiben somit wegen der geöffneten Steueröffnung 28 im Wesentlichen bestehen. Gleichzeitig verhindert die Mitnehmerscheibe 38 und der Mitnehmerring 36, dass sich der Hauptventilkörper ohne den Pilotventilkörper mit zu bewegen in die Austrittsöffnung 14 bewegt. Somit kann der Hauptventilkörper 12 je nach Stellung des Schwimmers 4 allmählich in Richtung auf die Austrittsöffnung 14 also in Schließstellung bewegt werden. Durch die mechanische Kopplung mit dem Schwimmer 4 werden Druckschwankungen gedämpft. Diese allmähliche Bewegung impliziert auch, dass der Hauptventilkörper 12 und damit auch der Schließabschnitt 10 je nach Flüssigkeitsstand in einer Zwischenstellung zwischen vollständig geschlossener und weit geöffneter Austrittsöffnung gehalten werden kann. Hierdurch wird ein ständiger Wechsel zwischen geöffnet und geschlossen bei dem erfindungsgemäßen Regelventil vermieden.

Wenn der Schwimmer 4 aus der Stellung gemäß Figur 9 aufgrund sinkenden Flüssigkeitsstandes sich ebenfalls weiter absenkt, so kann er allmählich die Stellung gemäß Figur 8 erreichen, bei der die Austrittsöffnung 14 geschlossen und die Steueröffnung 28 noch geöffnet ist. Dabei ist eine gegenüber herkömmlichen Regelventilen allmählichere Bewegung in diese geschlossene Stellung grundsätzlich möglich.

Wenn der Schwimmer 4 in seiner Stellung gemäß Figur 8 noch weiter absinkt, kann der Schließabschnitt 10 nicht mehr weiter bewegt werden, da er sich bereits in Kontakt mit dem Öffnungsrand 54 befindet. Nun bewegt sich durch das Absinken des Schwimmers 4 der Pilotventilkolben 8 auf die Steueröffnung 28 zu und verschließt sie schließlich. Nun kann sich in der Kammer 26 durch den Ringspalt in der Durchgangsöffnung 24 zwischen Pilotventilkolben 8 und der Führungsplatte 52 Druck aufbauen. Die Kraft in Schließrichtung, die sich durch das Produkt des ersten Differenzdrucks mit der Kammerstirnfläche ergibt überwiegt dann, je nach Vordruck im Behälter deutlich, der Kraft, die sich aus dem Produkt des zweiten Differenzdrucks mit der Öffnungsfläche ergibt und die Austrittsöffnung 14 wird fest verschlossen.

Somit wird erfindungsgemäß ein Regelventil geschaffen, das einerseits druckgesteuert ist, andererseits aber insbesondere in Übergangsbereichen direkt mechanisch gesteuert wird. Hierdurch lassen sich für die Hauptaustrittsöffnung 14 teilweise geöffnete bzw. geschlossene Stellungen erreichen. Dies kann von dem Flüssigkeitsstand, der auf den Schwimmer 4 wirkt abhängen. Insbesondere bei großen abzuführenden Flüssigkeitsmengen wird ein ständiges, insbesondere hartes Öffnen und Schließen des Regelventils vermieden.

## Patentansprüche

1. Regelventil (1) zum Abführen von Flüssigkelt aus einem Behälter (2), mit einem bewegbaren Hauptventilkörper (12) zum Öffnen und Schließen einer Austrittsöffnung (14) für die abzuführende Flüssigkeit, und einem bewegbaren Pilotventilkörper (8) zum Steuern des Hauptventilkörpers (12),
wobei der Hauptventilkörper (12) und der Pilotventilkörper (8) wenigstens in einer Stellung zueinander mechanisch miteinander gekoppelt sind und ein Mitnehmermittel (36, 38) zum Übertragen einer Bewegung des Pilotventilkörpers (8) auf den Hauptventilkörper (12) oder umgekehrt vorgesehen ist,
**dadurch gekennzeichnet, dass** zum Koppeln des Hauptventilkörpers mit dem Pilotventilkörper ein elastisches Kopplungsmittel (42), insbesondere eine Feder vorgesehen ist, und das Mitnehmermittel (36, 38) zum Übertragen einer Kraft des Pilotventilkörpers (8) auf den Hauptventilkörper (12) in Öffnungsrichtung des Hauptventilkörpers (12) ausgebildet ist und/oder das elastische Kopplungsmittel (42) zum Übertragen einer Kraft des Pilotventilkörpers (8) auf den Hauptventilkörper (12) in Schließrichtung des Hauptventllkörpers (12) ausgebildet ist.

2. Regelventil (1) nach Anspruch 1, **dadurch gekennzeichnet, dass** die Kopplung über einen körperlichen Kontakt erfolgt.

3. Regelventil (1) nach einem der vorstehenden Ansprüche, **dadurch gekennzeichnet, dass** der Hauptventilkörper (12) mechanisch, insbesondere über eine Hebelanordnung (6) und/oder über den Pilotventilkörper (8) mit einem Schwimmer (4) gekoppelt ist.

4. Regelventil (1) nach einem der vorstehenden Ansprüche, **dadurch gekennzeichnet, dass** der Schwimmer (4) so mit dem Hauptventilkörper (12) verbunden ist, dass eine etwaige Auftriebskraft am Schwimmer (4) in Öffnungsrichtung des Hauptventilkörpers (12) auf den Hauptventilkörper (12) wirkt.

5. Regelventil (1) nach einem der vorstehenden Ansprüche, mit einem Faltenbalg (30) zum Umgeben einer Kammer (26) in dem Hauptventilkörper (12), **dadurch gekennzeichnet, dass** der Hauptventilkörper (12) eine Steueröffnung (28) aufweist, die von dem Pilotventilkörper (8) verschließbar ist.

6. Regelventil (1) nach Anspruch 5, **dadurch gekennzeichnet, dass** der Faltenbalg (30) Im Wesentlichen den Hauptventilkörper (12) als Zylindermantel umgibt.

7. Regelventil (1) nach einem der Ansprüche 5 oder 6, **dadurch gekennzeichnet, dass** der Faltenbalg (30) eine Wand der Kammer (26), insbesondere zum Abschließen der Kammer (26) gegenüber dem Behälter (2) bildet.

8. Regelventil (1) nach einem der vorstehenden Ansprüche, **dadurch gekennzeichnet, dass** die vom Pilotventilkörper (8) verschließbare Steueröffnung (28) mit der Kammer (26) verbunden ist, so dass durch den Pilotventilkörper (8) die Kammer (26) geöffnet werden kann, um einen Druckabbau in der Kammer (26) zu ermöglichen.

9. Regelventil (1) nach einem der vorstehenden Ansprüche, **dadurch gekennzeichnet, dass** der Hauptventilkörper (12) eine zur Kammer (26) weisende Kammerstirnfläche aufweist, um einen ersten Differenzdruck zwischen einem Druck in der Kammer (26) und einem Außendruck in eine Kraft in Schließrichtung des Hauptventilkörpers (12) umzusetzen, und eine Öffnungsfläche, die zur Kammerstirnfläche abgewandt ist, um einen zweiten Differenzdruck zwischen dem Druck in dem Behälter (2) in eine Kraft in Öffnungsrichtung des Hauptventilkörpers (12) umzusetzen.

10. Regelventil (1) nach einem der vorstehenden Ansprüche, **dadurch gekennzeichnet, dass** der Pilotventilkörper (8) zumindest teilweise innerhalb des Hauptventilkörpers (12) angeordnet ist.
und dass der Pilotventilkörper (8) und der Hauptventilkörper (12) koaxial zueinander angeordnet sind und/oder wenigstens einer der beiden Ventilkörper (8, 12) entlang ihrer Längsachse bewegbar ist.

11. Regelventil (1) nach einem der vorstehenden Ansprüche, **dadurch gekennzeichnet, dass** der Faltenbalg (30) zum Verschließen der Kammer (26) an einer Seite mit einem Deckel (32) verbunden ist,
und dass der Deckel (32) gegenüber der Austrittsöffnung (14) und/oder der Öffnungsfläche bewegbar angeordnet ist.

12. Regelventil (1) nach einem der vorstehenden Ansprüche, **dadurch gekennzeichnet, dass** der Hauptventilkörper (12) einen Anschlag aufweist,
und dass der Anschlag mit einem Ende des Faltenbalgs (30) verbunden ist.

13. Regelventil (1) nach einem der vorstehenden Ansprüche, **dadurch gekennzeichnet, dass** der Pilotventilkörper (8) durch eine Durchgangsöffnung (24), die insbesondere in dem Deckel (32) angeordnet ist, in die Kammer (26) ragt und die Durchgangsöffnung (24) eine axiale Bewegung des Pilotventilkörpers (8) zulässt.

14. Regelventil (1) nach einem der vorstehenden Ansprüche, **dadurch gekennzeichnet, dass** der Pilotventilkörper (8) an einem Ende eine kegel- oder kugelförmige Verjüngung zum Verschließen der Steueröffnung (28) aufweist.

15. Behälter (2) mit einem darin angeordneten Regelventil (1) nach einem der vorstehenden Ansprüche.

## Claims

1. Control valve (1) for removing liquid from a container (2) comprising a movable main valve body (12) for opening and closing an outlet opening (14) for the liquid to be discharged, and a movable pilot valve body (8) for controlling the main valve body (12), wherein the main valve body (12) and the pilot valve body (8) are coupled together mechanically at least in one position relative to one another and an entrainment means (36, 38) is provided for transmitting a movement of the pilot valve body (8) to the main valve body (12) or vice-versa,
**characterised in that** for coupling the main valve body to the pilot valve body an elastic coupling means (42) is provided, in particular a spring, the entrainment means (36, 38) is adapted to transmit a force of the pilot valve body (8) to the main valve body (12) in the opening direction of the main valve body (12) and/or the elastic coupling means (42) is designed to transmit the force of the pilot valve body (8) to the main valve body (12) in the closing direction of the main valve body (12).

2. Control valve (1) according to claim 1, **characterised in that** the coupling is performed by means of body contact.

3. Control valve (1) according to one of the preceding claims, **characterised in that** the main valve body (12) is coupled to a float (4) mechanically, in particular by way of a lever arrangement (6) and/or by way of the pilot valve body (8).

4. Control valve (1) according to one of the preceding claims, **characterised in that** the float (4) is connected to the main valve body (12) such that any buoyancy force at the float (4) acts on the main valve body (12) in the opening direction of the main valve body (12).

5. Control valve (1) according to one of the preceding claims, comprising bellows (30) for surrounding a chamber (26) in the main valve body (12), **characterised in that** the main valve body (12) has a control opening (28) which can be closed by the pilot valve body (8).

6. Control valve (1) according to claim 5, **characterised in that** the bellows (30) substantially surround the main valve body (12) in the form of a cylindrical casing.

7. Control valve (1) according to one of claims 5 or 6, **characterised in that** the bellows (30) form a wall of the chamber (26), in particular for closing off the chamber (26) from the container (2).

8. Control valve (1) according to one of the preceding claims, **characterised in that** the control opening (28) closable by the pilot valve body (8) is connected to the chamber (26), so that the chamber (26) can be opened by the pilot valve body (8) to permit a reduction in pressure in the chamber (26).

9. Control valve (1) according to one of the preceding claims **characterised in that** the main valve body (12) has a chamber end face facing towards the chamber (26) to convert a first differential pressure between a pressure in the chamber (26) and an external pressure into a force in the closing direction of the main valve body (12) and an opening face which faces away from the chamber end face to convert a second differential pressure between the pressure in the container (2) into a force in the opening direction of the main valve body (12).

10. Control valve (1) according to one of the preceding claims, **characterised in that** the pilot valve body (8) is arranged at least partly in the main valve body (12), and **in that** the pilot valve body (8) and the main valve body (12) are arranged coaxially relative to each other and/or at least one of the two valve bodies (8, 12) can be moved along its longitudinal axis.

11. Control valve (1) according to one of the preceding claims, **characterised in that** the bellows (30) are connected on one side to a cover (32) for closing the chamber (26), and **in that** the cover (32) is arranged to be mobile with respect to the outlet opening (14) and/or the opening face.

12. Control valve (1) according to one of the preceding claims, **characterised in that** the main valve body (12) has an abutment and **in that** the abutment is connected to one end of the bellows (30).

13. Control valve (1) according to one of the preceding claims, **characterised in that** the pilot valve body (8) projects into the chamber (26) through a through opening (24) arranged in particular in the cover (32) and the through opening (24) permits the axial movement of the pilot valve body (8).

14. Control valve (1) according to one of the preceding claims, **characterised in that** the pilot valve body (8) has at one end a conical or spherical narrowing for closing the control opening (28).

15. Container (2) with a control valve (1) arranged therein according to one of the preceding claims.

## Revendications

1. Soupape de régulation (1) pour l'évacuation de liquides depuis un récipient (2), avec un corps de soupape principal (12) mobile pour l'ouverture et la fermeture d'un orifice de sortie (14) pour le liquide à évacuer et un corps de soupape de pilotage (8) mobile pour la commande du corps de soupape principal (12),
moyennant quoi le corps de soupape principal (12) et le corps de soupape de pilotage (8) sont couplés mécaniquement l'un à l'autre au moins dans une position et moyennant quoi un moyen d'entraînement (36, 38) est prévu pour la transmission d'un mouvement du corps de soupape de pilotage (8) au corps de soupape principal (12) ou inversement,
**caractérisée en ce que**, pour le couplage du corps de soupape principal au corps de soupape de pilotage, il est prévu un moyen de couplage (42) élastique, en particulier un ressort, et **en ce que** le moyen d'entraînement (36, 38) est réalisé pour la transmission d'une force du corps de soupape de pilotage (8) au corps de soupape principal (12) dans le sens de l'ouverture du corps de soupape principal (12) et/ou **en ce que** le moyen de couplage (42) élastique est réalisé pour la transmission d'une force du corps de soupape de pilotage (8) au corps de soupape principal (12) dans le sens de la fermeture du corps de soupape principal (12).

2. Soupape de régulation (1) selon la revendication 1, **caractérisée en ce que** le couplage s'effectue par l'intermédiaire d'un contact corporel.

3. Soupape de régulation (1) selon l'une quelconque des revendications précédentes, **caractérisée en ce que** le corps de soupape principal (12) est couplé mécaniquement, en particulier par l'intermédiaire d'un dispositif de levier (6) et/ou par l'intermédiaire du corps de soupape de pilotage (8), à un flotteur (4).

4. Soupape de régulation (1) selon l'une quelconque des revendications précédentes, **caractérisée en ce que** le flotteur (4) est relié au corps de soupape principal (12) de telle sorte qu'une poussée d'Archimède éventuelle sur le flotteur (4) agit sur le corps de soupape principal (12) dans le sens de l'ouverture du corps de soupape principal (12).

5. Soupape de régulation (1) selon l'une quelconque des revendications précédentes, avec un soufflet (30) pour entourer une chambre (26) dans le corps de soupape principal (12), **caractérisée en ce que** le corps de soupape principal (12) présente un orifice de commande (28) qui peut être fermé par le corps de soupape de pilotage (8).

6. Soupape de régulation (1) selon la revendication 5, **caractérisée en ce que** le soufflet (30) entoure sensiblement le corps de soupape principal (12) comme surface périphérique cylindrique.

7. Soupape de régulation (1) selon l'une quelconque des revendications 5 ou 6, **caractérisée en ce que** le soufflet (30) forme une paroi de la chambre (26), en particulier pour fermer la chambre (26) par rapport au récipient (2).

8. Soupape de régulation (1) selon l'une quelconque des revendications précédentes, **caractérisée en ce que** l'orifice de commande (28) pouvant être fermé par le corps de soupape de pilotage (8) est relié à la chambre (26), de telle sorte que la chambre (26) peut être ouverte par le corps de soupape de pilotage (8) pour permettre une annulation de la pression dans la chambre (26).

9. Soupape de régulation (1) selon l'une quelconque des revendications précédentes, **caractérisée en ce que** le corps de soupape principal (12) présente une surface frontale de la chambre tournée vers la chambre (26) pour convertir une première différence de pression entre une pression dans la chambre (26) et une pression extérieure en une force dans le sens de la fermeture du corps de soupape principal (12), et une surface d'ouverture qui est détournée de la surface frontale de la chambre pour convertir une deuxième différence de pression entre la pression dans le récipient (2) en une force dans le sens de l'ouverture du corps de soupape principal (12).

10. Soupape de régulation (1) selon l'une quelconque des revendications précédentes, **caractérisée en ce que** le corps de soupape de pilotage (8) est disposé au moins en partie à l'intérieur du corps de soupape principal (12),
et **en ce que** le corps de soupape de pilotage (8) et le corps de soupape principal (12) sont disposés coaxialement l'un par rapport à l'autre et/ou qu'au moins un des deux corps de soupape (8, 12) est mobile le long de son axe longitudinal.

11. Soupape de régulation (1) selon l'une quelconque des revendications précédentes, **caractérisée en ce que**, pour la fermeture de la chambre (26), le soufflet (30) est relié d'un côté à un couvercle (32),
et **en ce que** le couvercle (32) est disposé de manière mobile par rapport à l'orifice de sortie (14) et/ou par rapport à la surface d'ouverture.

12. Soupape de régulation (1) selon l'une quelconque des revendications précédentes, **caractérisée en ce que** le corps de soupape principal (12) présente une butée et **en ce que** la butée est reliée à une extrémité du soufflet (30).

13. Soupape de régulation (1) selon l'une quelconque des revendications précédentes, **caractérisée en ce que** le corps de soupape de pilotage (8) dépasse par une ouverture de passage (24), qui est disposée en particulier dans le couvercle (32), dans la chambre (26), et **en ce que** l'ouverture de passage (24) autorise un mouvement axial du corps de soupape de pilotage (8).

14. Soupape de régulation (1) selon l'une quelconque des revendications précédentes, **caractérisée en ce que** le corps de soupape de pilotage (8) présente, à une extrémité, un rétrécissement conique ou sphérique pour la fermeture de l'orifice de commande (28).

15. Récipient (2) avec une soupape de régulation (1) disposée à l'intérieur de celui-ci selon l'une quelconque des revendications précédentes.
